# EUROPEAN PATENT APPLICATION

(11) **EP 1 902 808 A1**
(43) Date of publication of application: **26.03.2008**
(21) Application number: 07252785.6
(22) Date of filing: 12.07.2007
(51) Int. Cl.: B23K 9/028, B23K 9/32, B23K 37/00, B08B 15/02, B25J 21/02, G21F 7/04

(54) **Enclosure for use during operations for applying heat to at least one conduit member comprising gloved armature means and viewing section ; Method of enclosing a conduit upon which a heating process is to be conducted using such enclosure**

(30) Priority: 21.09.2006 US 524624
(71) Applicant: Wardlaw, Louis, Houston, TX 77284 (US)
(72) Inventor: Wardlaw, Louis, Houston, TX 77284 (US)
(74) Representative: Brown, James Douglas

(57) **Abstract**

The present invention relates to an enclosure (100) and method of enclosing a conduit (A) upon which a heating process is to be conducted using such enclosure (100). An inflatable body (10) has a central opening (10A,10B) at each end. First and second gloved armatures (11A,11B) extend into the interior and for receipt of the hand of a human operator. A viewing section (13) is disposed through the enclosure (100) between the armatures (11A,11B) for observing the operation. An inflation conduit (AL) may be received through the enclosure (100) for initiating inflation. The openings (10A,10B) are sealing secured against the conduit (A) after the enclosure (100) is inflated and the conduit (A) properly inserted therein.

## Description

### BACKGROUND OF THE INVENTION

### FIELD OF THE INVENTION

The invention relates to an enclosure for sealingly securing an inflatable enclosure around a conduit which is to be heated, such as for welding repairs or the like.

### BRIEF DESCRIPTION OF THE PRIOR ART

During the installation and/or repair of oil field and/or gas transmission pipelines and the like, or at the sight of the drilling, workover or completion of a subterranean oil or gas well, it sometimes becomes necessary to repair a defect in the metal conduit forming a part of the gas or oil transmission line or the like. Additionally, it is frequently required that such conduits be affixed one to another, such as by welding operations, using known methods and devices.

When such operations are required to be made, the welding operators frequently are exposed to sparks and other extremely hot debris being sprayed outwardly around the area of the welding operation. While the welder typically will wear a mask or other fire resistant clothing materials, such material may not protect the entire body from exposure to such detriments during the welding operation and may also interfere with operator agility due to the cumbersome nature of the protective materials.

The present invention addresses these problems encountered in the past.

### SUMMARY OF THE INVENTION

An enclosure and method for use during operations applying heat, such as in welding operations, to at least one conduit member, is provided. The enclosure includes an inflatable body having a central opening at each end. First and second fire-resistant gloved armature means are provided on the body extending into the interior of the inflatable body, for receipt of a hand of a human operator during the operations. A viewing section is disposed through and across the enclosure and between the means. Means are provided for receipt of an inflation conduit for inflating the body prior to the operations. Means are also provided for selectively sealingly securing the central openings around least one conduit member while the body is inflated and during the operations.

In another alternate preferred embodiment, air pump means are provided for inflating the body prior to initiating welding or other operations. Air filter means may also be provided on the conduit downstream of the pump means.

A fume extractor suction pump means may also be provided in yet another alternate preferred embodiment including a second conduit means communicating between the interior of the body means and the pump means. An air filter may also be provided on the second conduit and disposed thereon downstream of the suction pump means for removal of the fumes or other gaseous or other particulate matter before exhaust into the atmosphere.

In yet another embodiment, the interior of the body can provide an inert atmospheric chamber for specialty welding by inflating the body with an inert gas, such as Argon or the like.

The method of the present invention includes introducing the conduit into the enclosure through one of the openings. Thereafter, the body and the conduit are moved relative to one another such that a portion of the conduit extends through and out of the other of the ends of the enclosure body. The conduit is then oriented relative to the enclosure body to place the viewing section and the armature means into working proximity with operation to be performed on the conduit. The central openings of the body are sealing secured around the exterior of the conduit. A gas is introduced into the conduit and the filter and into the enclosure body to inflate the body, and the welding operation is initiated. The fume extractor pump means extracts and filters any metal or other particulates and/or fumes caused during the welding or other operation, and the fumes may be harmlessly discharged into the atmosphere.

### DESCRIPTION OF THE DRAWINGS

FIG. 1 is a perspective view of the apparatus of the present invention with the conduit inserted through the ends of the inflatable body, prior to the welding operation being initiated.

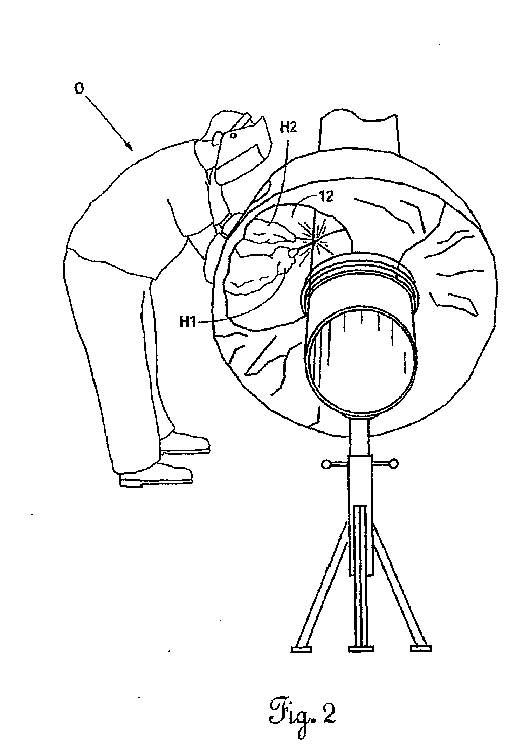

FIG. 2 is a partial perspective, partial cross view of the device as illustrated in Fig. 1 shown during a welding operation.
FIG. 3 is a view similar to that of Fig. 1 illustrating alternative preferred embodiments in the form of a filter means for the pump, as well as an exhaust fume extractor means.

### DESCRIPTION OF THE PREFERRED EMBODIMENTS

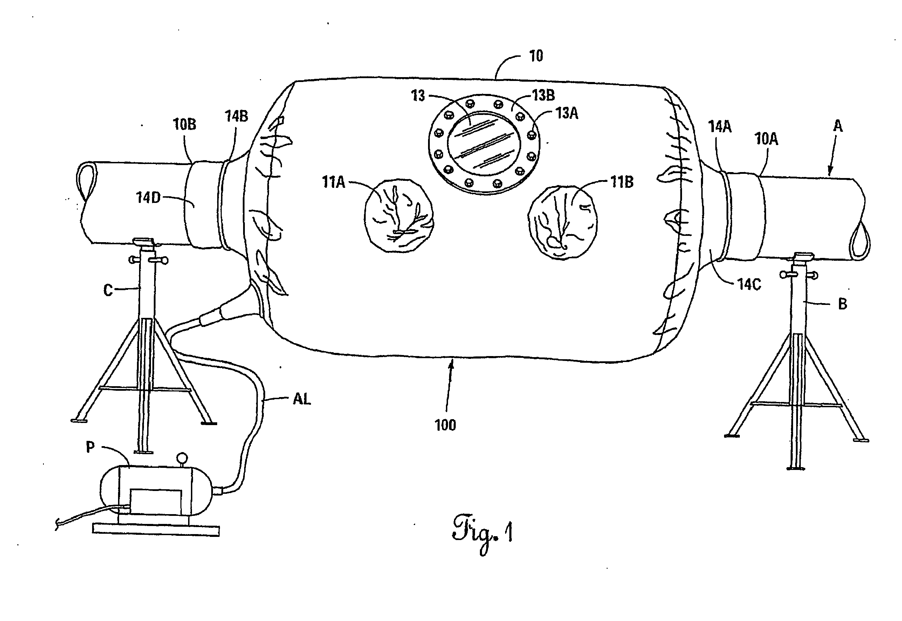

Now with first reference to Fig. 1, there is shown the apparatus or enclosure 100. A conduit A has been inserted through a first central opening 10A of an inflatable body 10 such that an end of the conduit A protrudes out of a companion and horizontally aligned opposite second central opening 10B. The conduit is placed on supporting tripods B and C, such that the body 10 does not touch the ground or floor during a welding operation to be performed.

It will be appreciated that reference to a "conduit" herein includes a single conduit, or two separate conduits that are to be welded together within the body 10, as hereinafter described. In instances in which two conduit members are to be placed within the body 10, each conduit is inserted into the body 10 through a respective end or opening 10A, 10B and oriented herein, as necessary.

The body includes first and second fire resistant gloved armature means 11 A and 11 B which each extend into the interior 12 and are formed to provide gloves contoured as shown as H1 and H2 in the form of hands of a human operator O.

The body 10 also includes a circular viewing section 13, typically made of Plexiglas or the like and secured to the body by a series of exteriorally introduced bolts inserted through a securing ring 13B. The bolts are secured to the interior of the inflatable body 10 on the interior with individual threaded nuts (not shown). The viewing section 13B may also be secured to the exterior of the body 10 with any one of a number of elastomeric substances, of known composition and commercially available from a number of sources for use with high temperature exposed materials which are described herein for use in forming the body 10. The viewing section 13B may also be secured to the body 10 by means of Velcro attachments, either interiorally and/or exteriorally onto the body 10. Each of the first and second openings 10A and 10B may be sealingly closed around the exterior of the conduit. A subsequent to introduction and orientation within the interior of the body 10 by means of selectively sealing means 14A and 14B, including first and second sealing sleeves 14C and 14D extending outwardly from the body 10 and which may be fabricated from the same material as the body 10. A selectively retractable compressing elastomeric or metal claim 14E and 14F may be secured around the sleeves 14C and 14D proximate each end or opening 10A, 10B after placement of the conduit A in the apparatus 100.

Likewise, a similarly fabricated means, such as air sleeve 15, is provided at one side of the body 10 for receipt of a selective disengageable air line AL which, in turn, is in communication with an electric or other activatable air pump P.

The inflatable body 10 may be made of a material comprising a member selected from the class consisting of:
(a) 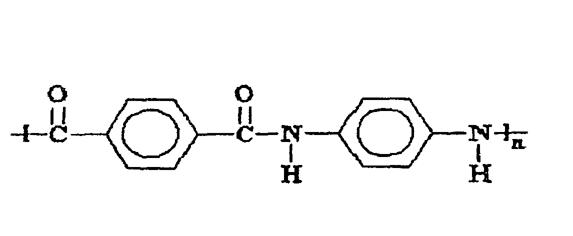 and
(b)

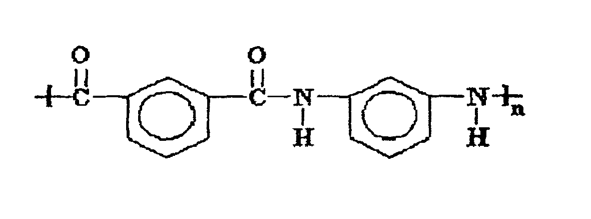

In Nomex the aromatic groups are all linked into the backbone chain through the 1 and 3 positions. This is called meta-linkage.

Such a material is commercially available from the Dupont Chemical Company and is sold under the trademark NOMEX. In this product, the aromatic groups are all linked into the backbone chain through the 1 and 3 positions. This is typically referred to as *meta*-linkage. **NOMEX** is the registered brand name of a flame retardant meta-aramid material marketed and first discovered by DuPont in the 1970s. It can be considered an aromatic "nylon". It is sold in both fiber and sheet forms and is used as a fabric wherever resistance from heat and flame is required. Nomex sheet is actually a calendared paper and made in a similar fashion. The paper is used in electrical laminates such as circuit boards and transformer cores as well as fireproof honeycomb structures were it is saturated with a phenolic resin. Both the firefighting and vehicle racing industries use NOMEX to create clothing and equipment that can stand up to intense heat. It is the *meta* variant of the *para*-aramid Kevlar. Both aramids are heat and flame resistant but Kevlar, having a para-orientation can be molecularly aligned and gives high strength. Meta aramid polymer cannot align during filament formation and has poor strength.

Plastics are moldable chemically-fabricated (synthetic) materials derived mostly from fossil fuels, such as oil, coal or natural gas. The long molecules in plastics are composed of carbon atoms linked into chains. One type of plastic, polyethylene, is composed of extremely long molecules, each containing over 200,000 carbon atoms. These long molecule chains give plastics unique properties and distinguish plastics from material such as metal that have crystalline structures. Fossil fuels contain hydrocarbons, which provide the building blocks for long polymer molecules. The building blocks called monomers link together to form long carbon chains called polymers. The process of forming these long molecules from hydrocarbons is called polymerization. The molecules typically form viscous sticky substances known as resins which are the materials used to make plastic products or articles by heating the resins to their specific melting range and molding them into articles by various methods.

The carbon backbone of polymer molecules often bond with smaller side chains consisting of other elements, including chlorine, fluorine, nitrogen and silicon, for example. These side chains give plastics distinguishing characteristics. For example, when chlorine atoms substitute for hydrogen atoms along the carbon chain, the result is polyvinyl chloride, one of the most versatile and widely used plastics in the world.

The addition of chlorine makes the plastic harder and more resistant. The advantages and disadvantages of different plastics are associated with the unique chemistry of each plastic which determines the physical, mechanical and thermal properties of the molded article.

Examples of commonly used thermoplastics which may be sued in forming the body 10 are: polyethylene (PE), polyvinyl chloride (PVC), polypropylene (PP), polystyrene (PS), polyethylene terephthalate (PET), acrylonitrile butadiene styrene (ABS), polymethyl methacrylate (PMMA), polyamide (PA) and polycarbonate (PC). In addition, many variations and hybrid engineered resins based on these are in use today.

Many different processes can be used to make products from thermoplastics for use as the body 10 herein. Some of the more common of these processes are injection molding, extrusion molding, blow molding, injection blow molding, blow film extrusion, calendaring, thermoforming, casting and expansion processes. In all these processes, the plastic must be softened or sufficiently liquefied in order to allow the resin to flow and create the shape of the article. For convenience, all these plastic resin forming processes will be simply referred to as "molding process" hereinafter.

The body 10 and the sleeves 14A, 14B and 15 are made of fire resistant textile materials. Outer textile materials for fire fighting clothing are useful for the formation of the body 10 as well as the sleeves 14A, 14B and 15. Such materials have previously been manufactured from 100% meta-aramid or polyamideimide blends of meta-aramid and para-aramid fibres or by use of core spun yarns or staple mixtures with polyparaphenylene terephthalamide copolymer or fibres comprising para-aramid cores with meta-aramid or polyamideimide covers. The combination of these fibres in the fabric enhances the non-break open protection of the product. however meta-aramid and polyamideimide fibres shrink, consolidate and thicken when exposed to a high temperature beat source. The presence of para-aramid or polyphenylene terephthalamide copolymer in either the fibre blend or as a core can be used to prevent fibre shrinkage and consequent breaking open of the garment. However the inclusion of para-aramid fibre in the blend has been found to be insufficient in tightly woven fabrics to prevent breaking open and does not increase the air gap between the wearer and the heat source. Consequently there is a need for improved textile materials for manufacture of fire fighting garments and the like.

Fire fighting garments, which may be used in the manufacture of the body 10, sleeves 14A, 14B and 15 have been made from a plurality of textile layers, including an outer layer of woven meta-aramid fibre, for example as manufactured under the Trademark ***Nomex*** as previously stated. Break open protection may be afforded by blending with para-aramid fibres, e.g. as manufactured under the trademark Kevlar and as disclosed in US Patent No 3,063,966 and US Patent No 3,506,990.

PCT/GB00/01449 discloses a fire resistant textile material comprising a woven face fabric composed of fibres selected from meta-aramid, polyamideimide and mixtures thereof, the fabric including a woven mesh of low thermal shrinkage fibres. Also useful for incorporation into the body 10 or sleeves 14A, 14B and/or 15 is a woven faced fabric composed of face fibres selected from meta-aramid, polyamideimide and mixtures thereof the fabric including a woven back of low thermal shrinkage fibres, wherein the overfeed of the lower thermal shrinkage fibres is selected so that the sum of the extension under load and take-up is approximately equal to the extension under load and take-up of the face fibres. Such product is known as Kevlar ®. This product is a polyamide, in which all the amide groups are separated by para-phenylene groups, that is, the amide groups attach to the phenyl rings opposite to each other, at carbons 1 and 4. Kevlar ® is shown as follows:

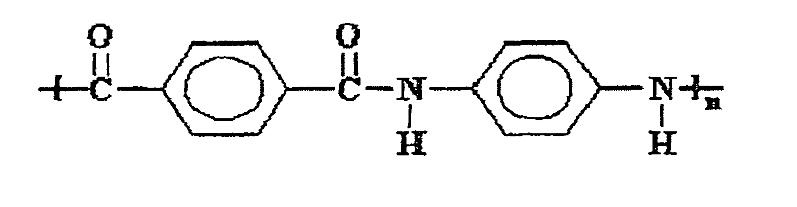

In Kevlar the aromatic groups are all linked into the backbone chain through the 1 and 4 positions. This is called para-linkage.

Novex ® on the other hand, has meta-phenylene groups, that is, the amide groups are attached on the phenyl ring at the 1 and 3 positions.

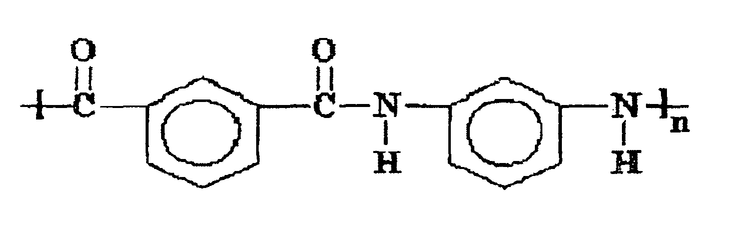

In Nomex the aromatic groups are all linked into the backbone chain through 1 and 3 positions. This is called meta-linkage.

In the preferred embodiment as illustrated, the armature means 11A and 11 B comprises a meta-aramid or polyamideimide blend of a meta-aramid and para-aramid fibre, well known to those skilled in the art. Specifically, the armature means 11A and 11B may comprise a polyparaphenylene terephthalamide copolymer and/or a para-aramid core fiber having a meta-aramid or polyamideimide cover. Such armatures are commercially available as...available as material 6445-2-SN 60" from Alpha Associates, Inc., of Woodbridge, New Jersey.

The viewing section 13 may comprise a Plexiglass or other similar material and is secured to the body 10 by known means, such as sewing, bolting, or any other satisfactory mechanical means.

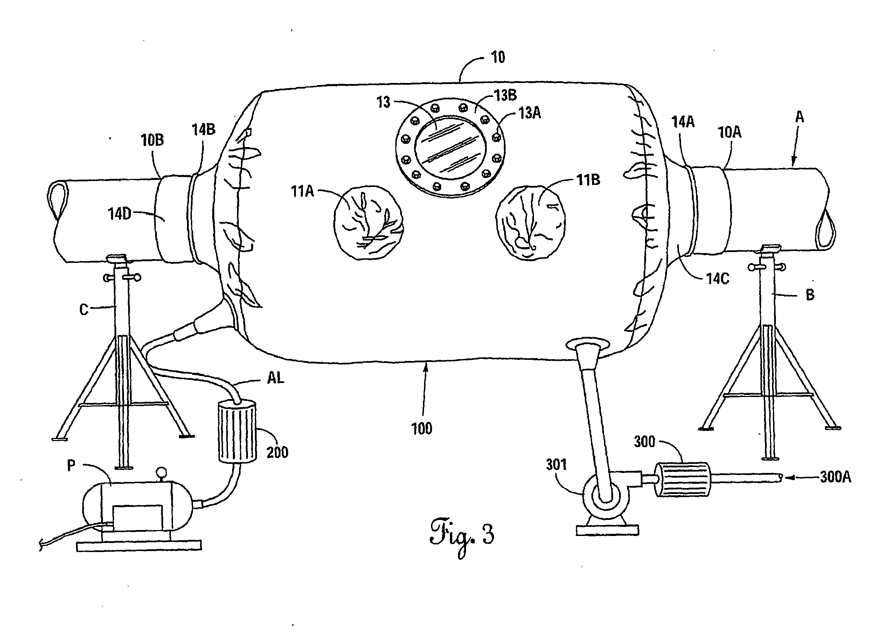

In an alternate preferred embodiment, illustrated in Fig. 3, the apparatus 10 further includes an air or other gas filter 200 on the conduit AL and downstream of the pump P. The filter 200 may be selected from a number of well known and commercially available air filter unites known to those skilled in the art.

In yet another preferred embodiment, also shown in Fig. 3, a second conduit 200 is sealing engaged through a port or opening 25 on the apparatus 10 and communicates with a fume extractor pump means 301 which, in turn, has a second or fume extractor filter 302 downstream thereof, This filter is also well known to those skilled in the art and may be commercially obtained from a number of known sources. A section of conduit 300 is provided downstream of the filter means 302 with opening 300A therein for harmless discharge into the atmosphere of gaseous components passed through the conduit 300.

Both the pump means P and the fume extractor means 301 may utilize electrically or pneumatically activated pumps, commercially available from a number of sources.

### OPERATION

When it is desired to repair a conduit A or to weld two conduit members A together, the end of the conduit A is introduced into the open end 10A, of the body 10 and the body 10 is moved horizontally along it until the area to be repaired, or joined if two conduits A are to be secured together by welding, is immediate the armatures 11 A and 11 B and such area is in alignment with the viewing section 13. The conduit(s) are then placed on tripods B and C. Additional tripods may be used to support opposite ends of the conduits A in cases where two conduits are to be welded together within the interior 12 of the body 10. The second conduit 300 is secured at the sealed opening 24 on the apparatus 10. The fume extractor is secured to the conduit 300 and the filter means 302 is connected to the downstream side of the fume extractor pump means 301, with a short section of conduit 300 extending there from for discharge into the atmosphere through opening 33A any fumes occurring during the operation.

The air line AL is scalingly secured to the sleeve and the pump P is activated to inflate the body 10. Thereafter, the operator O may insert his hands into the respective armatures 11 A and 11B, such the welding procedures may be performed without risk of sparks and other hot debris resulting from the welding operation contacting the operator O or being sprayed exteriorally of the interior 12 of the body 10.

In one embodiment, when it is desired to use the apparatus 100 of the present invention to provide an inert gas chamber for specialty welding operations, or the like, Argon or other inert gas may be injected through the line AL and into the chamber or interior 10 to convert the interior into an inert gas chamber for such operations.

It will be appreciated that one of the benefits of the present invention is that its use will isolate the welding area, such as from flammable gases found exteriorally of the housing. Furthermore, it protects the area to be welded from wind or air currents. Its use also makes welding within an inert gas atmosphere possible in open areas at an actual pipeline or other operation. Also, it is possible to make simple and obvious modifications or additions for dry welding under water.

Although the invention has been described in terms of the embodiments as shown, the invention is limited only by the scope of the appended claims. Those skilled in the art will readily perceive alternative embodiments once this specification is read and understood.

## Claims

1. An enclosure for use during operations applying heat to at least one conduit member, comprising:
(a) an inflatable body, said body having a central opening at each end;
(b) first and second fire-resistant gloved armature means on said body extending into the interior of said inflatable body, for receipt of a hand of a human operator during said operations;
(c) a viewing section disposed through and across said enclosure and between said armature means;
(d) means for receipt of an inflation conduit securable to air pump means for inflating the body prior to said operations; and
(e) means for selectively scalingly securing the central openings around said at least one conduit member while the body is inflated and during said operation.

2. The enclosure of claim 1 wherein the inflatable body comprises a member selected from the class consisting of:
(a) 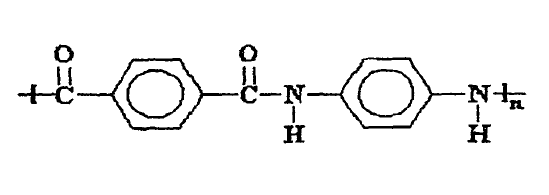 and
(b)

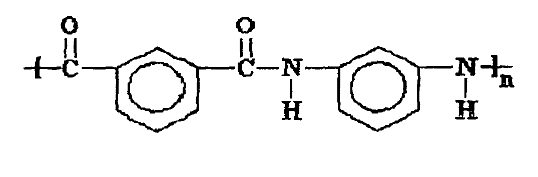

3. The enclosure of claim 1 wherein the armature means comprises a meta-aramid or polyamideimide blend of a meta aramid and para-aramide fibre.

4. The enclosure of claim 1 wherein the armature means comprises a polyparaphenylene terephthalamide copolymer.

5. The enclosure of claim 1 wherein the armature means comprises a para-aramid core fiber having a meta-aramid or polyamideimide covers.

6. The enclosure of any preceding claim further comprising air pump means for inflating the body prior to said operations; and air filter means on said conduit downstream of said pump means.

7. The enclosure of any preceding claim, further comprising fume extractor suction pump means, including a second conduit means communicating between the interior of the body means and the pump means.

8. The enclosure of claim 7, further comprising an air filter on said second conduit and disposed thereon downstream of said suction pump means.

9. A method for enclosing a conduit upon which a heating process is to be conducted, comprising the steps of:
(1) providing an enclosure for said conduit, said enclosure comprising:
(a) an inflatable body, said body having a central opening at each end;
(b) first and second fire-resistant gloved armature means on said body extending into the interior of said inflatable body, for receipt of a hand of a human operator during said operations;
(c) a viewing section disposed through and across said enclosure and between said armature means;
(d) means for receipt of an inflation conduit for inflating the body prior to and during said operations; and
(e) means for selectively sealingly securing the central openings around said at least one conduit member while the body is inflated and during said operations;
(2) introducing the conduit into said body through one of the openings;
(3) moving the body and the conduit relative to one another such that a portion of the conduit extends through and out of the other of said ends of the body;
(4) orienting the conduit relative to the body to place the viewing section and the armature means into working proximity with operation to be performed on the conduit;
(5) sealingly securing the central openings of the body around the exterior of the conduit; and
(6) introducing a gas into the body to inflate the body.

10. A method according to claim 9, wherein step (1) further comprises:-
(f) air pump means for inflating the body prior to said operations; and air filter means on said conduit downstream of said pump means;
and step (6) further comprises
activating the pump and introducing a gas into the conduit and through the filter means and within the body to inflate the body.

11. A method according to claim 10, wherein step (1) further comprises:-
(g) fume extractor suction pump means, including a second conduit means communicating between the interior of the body means and the pump means, and further comprising air filter means on said second conduit and disposed thereon downstream of said suction pump means and further comprising additional step:-
(7) activating the fume extractor suction pump means to effectively remove from within the body during the operation fumes resulting during the operation.
